# EUROPEAN PATENT APPLICATION

(11) **EP 4 800 776 A1**
(43) Date of publication of application: **02.09.2026**
(21) Application number: 24899248.9
(22) Date of filing: 11.07.2024
(51) Int. Cl.: H01M 4/587, H01M 4/133, H01M 4/1393

(54) **GRAPHITE NEGATIVE ELECTRODE ACTIVE MATERIAL AND PREPARATION METHOD THEREFOR, SECONDARY BATTERY CONTAINING SAME, AND ELECTRIC DEVICE**

(30) Priority: 07.12.2023 CN 202311679774
(71) Applicant: Contemporary Amperex Technology Co., Limited, Ningde, Fujian 352100 (CN)
(72) Inventor: MA, Jianjun, Ningde, Fujian 352100 (CN); HE, Libing, Ningde, Fujian 352100 (CN); CHEN, Meiwan, Ningde, Fujian 352100 (CN)
(74) Representative: Kraus & Lederer PartGmbB
(86) International application number: PCT/CN2024/104997
(87) International publication number: WO 2025/118597

(57) **Abstract**

A graphite negative electrode active material and a preparation method therefor, a secondary battery containing same, and an electric device. The volume distribution particle size Dv1 of the graphite negative electrode active material is 1.5 µm-3 µm, and the graphite negative electrode active material comprises primary particle morphology. The graphite negative electrode active material can improve the cycling performance of the battery and prolong the service life of the battery.

## Description

### CROSS-REFERENCE TO RELATED APPLICATIONS

The present disclosure claims priority to Chinese Patent Application No. 202311679774.7, filed on December 07, 2023 and entitled "GRAPHITE NEGATIVE ELECTRODE ACTIVE MATERIAL AND PREPARATION METHOD THEREFOR, SECONDARY BATTERY CONTAINING SAME, AND POWER CONSUMING APPARATUS", which is incorporated herein by reference in its entirety.

### TECHNICAL FIELD

The present disclosure relates to the technical field of secondary batteries, and in particular, to a graphite negative electrode active material and a preparation method therefor, a secondary battery containing the same, and a power consuming apparatus.

### BACKGROUND

With proposal of the carbon neutrality target and policy, the market of secondary batteries used for energy storage comes into large burst. For an energy storage battery, a long cycle life is a key indicator. Especially, for an energy storage battery applied to a large energy storage power station, to prolong the service life and reduce the replacement frequency, it is necessary to further develop an energy storage battery having a longer cycle life.

### SUMMARY

The present disclosure is disclosed in view of the foregoing issue, and an objective of the present disclosure is to provide a graphite negative electrode active material and a preparation method therefor, a secondary battery containing the same, and a power consuming apparatus, to effectively improve the cycle life of the battery and prolong the service life of the battery.

A first aspect of the present disclosure provides a graphite negative electrode active material, where a volume distribution particle size Dv1 of the graphite negative electrode active material ranges from 1.5 µm to 3 µm; and the graphite negative electrode active material includes a primary particle morphology.

The volume distribution particle size Dv1 of the graphite negative electrode active material is in a suitable range, and the material has a particular particle morphology, so that the negative electrode plate has an excellent liquid absorption rate. In a battery cycle process, the electrolyte solution can fully wet the negative electrode plate in a process of repeated lithium de-intercalation of the negative electrode, reducing a possibility of occurrence of local polarization. In this way, the current of the negative electrode plate is evenly distributed in the cycle process, reducing a possibility of occurrence of a side reaction on the interface of the negative electrode in the cycle process, and reducing an impact of a phenomenon of blocking pores by a by-product generated by the side reaction on the cycle performance of the battery. In addition, the volume distribution particle size Dv1 in a suitable range is beneficial to improving a binding force between particles of the graphite negative electrode active material, effectively maintaining electrical contact between the particles, improving the dynamic performance of the battery, and reducing negative impact of the phenomenon of lithium plating on the cycle performance.

In another aspect, the graphite negative electrode active material includes primary particles. The primary particles have excellent structural stability, which helps to reduce the crushing of the structure caused by the expansion and contraction of the graphite negative electrode active material in a cycle process, improve the structural stability of the graphite negative electrode active material, and further improve the cycle performance of the secondary battery.

In conclusion, in the present disclosure, by limiting the volume distribution particle size Dv1 of the graphite negative electrode active material and the particle type of the graphite negative electrode active material, the cycle performance of the battery can be effectively improved, and the service life of the battery can be prolonged.

In any implementation, a specific surface area of the graphite negative electrode active material is less than or equal to 1.4 m²/g. In some embodiments, a specific surface area of the graphite negative electrode active material ranges from 0.6 m²/g to 1.3 m²/g.

That the specific surface area of the graphite negative electrode active material meets a suitable range helps to reduce a side reaction of the graphite negative electrode active material in a cycle process, reduces loss of active lithium, and helps to improve storage stability and cycle stability of the battery.

In any implementation, a volume distribution particle size Dv50 of the graphite negative electrode active material ranges from 12 µm to 16 µm. In some embodiments, a volume distribution particle size Dv50 of the graphite negative electrode active material ranges from 13 µm to 15 µm.

The graphite negative electrode active material has a large volume distribution particle size Dv50, helping to form a proper channel structure between particles of the negative electrode film layer, helping the electrolyte solution to fully wet the negative electrode plate, reducing a possibility of partial polarization of the electrode plate, and reducing impact of a black speckle phenomenon on the cycle life and storage stability of the battery.

In any implementation, based on a total quantity of particles of the graphite negative electrode active material, a quantity proportion of primary particles is greater than or equal to 80%. In some embodiments, based on a total quantity of particles of the graphite negative electrode active material, a quantity proportion of primary particles ranges from 85% to 100%.

Within this range, the primary particles help to reduce the crushing of the structure of the active material caused by the expansion and contraction of the graphite negative electrode active material in a cycle process, improve the structural stability of the graphite negative electrode active material, and further improve the cycle performance and the storage life of the secondary battery.

In any implementation, a gram capacity of the graphite negative electrode active material is greater than or equal to 340 mAh/g. In some embodiments, a gram capacity of the graphite negative electrode active material ranges from 341 mAh/g to 347 mAh/g.

The graphite negative electrode active material has a high gram capacity, to provide a material basis for a battery with a high energy density. In addition, the gram capacity of the graphite negative electrode active material falls within the range, and the particle strength thereof is high, reducing a possibility that the particles tend to be flat during a cold pressing process of the electrode plate, and avoiding significantly lengthening of a transport path of an electrolyte solution during the cold pressing process, helping to reduce the tortuosity of the negative electrode plate, facilitating circulation of the electrolyte solution, and improving the cycle performance and storage stability of the battery.

In any implementation, a tap density of the graphite negative electrode active material ranges from 1.2 g/cm² to 1.4 g/cm².

The case that the tap density of the graphite negative electrode active material falls within the foregoing range helps to form a suitable channel structure between particles of the negative electrode film layer, thereby improving wettability of the electrolyte solution for the negative electrode plate, and improving the cycle performance and storage stability of the secondary battery. In addition, a suitable tap density may further improve a compaction density of the negative electrode film layer, and further improve the energy density of the secondary battery.

In any implementation, a particle size distribution (Dv90-Dv10)/Dv50 of the graphite negative electrode active material ranges from 1.20 to 1.70. In some embodiments, a particle size distribution (Dv90-Dv10)/Dv50 of the graphite negative electrode active material ranges from 1.35 to 1.60.

That the particle size distribution of the graphite negative electrode active material falls within the range helps to increase the concentration of particle sizes of the graphite negative electrode active material, increase the arrangement concentration of the particles, and reduce the tortuosity of the negative electrode plate, to cause the electrolyte solution to fully wet the negative electrode plate, thereby improving the cycle performance of the battery; and can further reduce uneven distribution of active ions in the graphite negative electrode active material caused by a relatively large particle size difference, reduce a side reaction between the graphite negative electrode active material having a smaller particle size and the electrolyte solution, and improve the cycle performance and the storage stability of the secondary battery. In addition, the particle size distribution of the graphite negative electrode active material is in the foregoing range, and the particle packing performance thereof is relatively good, to help to improve the compaction density of the negative electrode film layer, thereby further improving the energy density of the secondary battery.

A second aspect of the present disclosure provides a preparation method for a graphite negative electrode active material, including the following steps: providing a raw material; treating the raw material to obtain a precursor; performing graphitization treatment on the precursor to obtain an intermediate product; and performing sieving treatment on the intermediate product to obtain a graphite negative electrode active material, where a volume distribution particle size Dv1 of the graphite negative electrode active material ranges from 1.5 µm to 3 µm; and the graphite negative electrode active material includes a primary particle morphology.

By using the foregoing preparation method, a graphite negative electrode active material having a volume distribution particle size Dv1 within a suitable range and mainly having a primary particle morphology can be prepared, which can improve the cycle performance of the battery and prolong the service life of the battery.

In any implementation, the treating the raw material specifically includes the following steps:
crushing, shaping, and classifying the raw material, to obtain a precursor; and
removing a proportion of fine powder in a process of the classifying, where
based on a total mass of the raw material, a mass proportion of the removed fine powder ranges from 10% to 35%; and a volume distribution particle size Dv50 of the fine powder ranges from 3 µm to 7 µm, and (Dv90-Dv10)/Dv50 of the fine powder is greater than 1.6.

By controlling the mass proportion of the removed fine powder to be in a suitable range, the volume distribution particle size Dv1 of the graphite negative electrode active material can be controlled to be in a suitable range, which not only enables the electrode plate to have an excellent liquid absorption rate, and enables the electrolyte solution to fully wet the negative electrode plate, but also enables the graphite particles to have excellent electrical contact with each other, thereby comprehensively improving the cycle performance of the battery.

In any implementation, a power used for the graphitization treatment is 70% to 90% of a rated power of a graphitization device.

In any implementation, the power used for the graphitization treatment ranges from 23000 W to 25000 W.

In any implementation, a temperature holding time of the graphitization treatment ranges from 10 h to 50 h.

In any implementation, the precursor meets at least one of the following conditions:
a volume distribution particle size Dv50 of the precursor ranges from 12 µm to 18 µm; and/or
a particle size distribution (Dv90-Dv10)/Dv50 of the precursor ranges from 1.2 to 1.8.

A third aspect of the present disclosure provides a secondary battery, including a negative electrode plate, where the negative electrode plate includes the graphite negative electrode active material according to the first aspect, or a graphite negative electrode active material prepared by using the preparation method according to the second aspect.

In any implementation, the compaction density of the negative electrode film layer ranges from 1.35 g/cm³ to 1.65 g/cm³. In some embodiments, the compaction density of the negative electrode film layer ranges from 1.40 g/cm³ to 1.55 g/cm³.

A smaller compaction density of the negative electrode film layer indicates more pores and larger pore sizes of the negative electrode film layer, being easier for the electrolyte solution to enter the negative electrode channel, and being easier for the electrolyte solution to wet the negative electrode plate. However, when the compaction density of the negative electrode film layer is excessively small, the energy density of the battery decreases, and bonding between the active substance and the current collector and bonding between the active substances in the negative electrode film layer may also be affected. Consequently, the active substances shed in a cycle process, and even a safety accident is caused.

The compaction density of the negative electrode film layer falls within the foregoing range, which can ensure that the negative electrode film layer has rich channels, the electrolyte solution easily wets the negative electrode plate, to improve the cycle performance and storage stability of the battery, and the battery has a high energy density.

In any implementation, the areal density of the negative electrode film layer ranges from 7 mg/cm² to 14 mg/cm². In some embodiments, the areal density of the negative electrode film layer ranges from 9 mg/cm² to 12 mg/cm².

The areal density of the negative electrode film layer is within a suitable range, and the thickness of the negative electrode film layer is suitable. In one aspect, the distance for the electrolyte solution to transversely wet the electrode plate is relatively short, and the time required for the electrolyte solution to completely wet the negative electrode plate is also relatively short, thereby reducing the possibility of occurrence of local polarization and improving the cycle performance of the battery. In the other aspect, the areal density within a suitable range also ensures that the battery has a particular energy density.

A fourth aspect of the present disclosure provides a power consuming apparatus, including the secondary battery of the third aspect of the present disclosure.

### BRIEF DESCRIPTION OF THE DRAWINGS

FIG. 1 is a schematic view of a secondary battery according to an embodiment of the present disclosure.
FIG. 2 is an exploded view of the secondary battery according to the embodiment of the present disclosure as shown in FIG. 1.
FIG. 3 is a schematic view of a battery module according to an embodiment of the present disclosure.
FIG. 4 is a schematic view of a battery pack according to an embodiment of the present disclosure.
FIG. 5 is an exploded view of the battery pack according to the embodiment of the present disclosure as shown in FIG. 4.
FIG. 6 is a schematic view of a power consuming apparatus in which a secondary battery serves as a power source according to an embodiment of the present disclosure.

### Description of reference numerals:

1: battery pack; 2: upper box body; 3: lower box body; 4: battery module; 5: secondary battery; 51: housing; 52: electrode assembly; and 53: top cover assembly.

### DETAILED DESCRIPTION

Hereinafter, embodiments that specifically disclose a graphite negative electrode active material and a preparation method therefor, a secondary battery containing the same, and a power consuming apparatus of the present disclosure will be described in detail with reference to the drawings as appropriate. However, there may be situations where unnecessary detailed explanations are omitted. For example, there are situations where detailed explanations of well-known matters are omitted and repeated explanations of the same structure are actually provided. Thus, the following description does not become unnecessarily lengthy, which facilitates the easy comprehension of those skilled in the art. In addition, the drawings and subsequent descriptions are provided for those skilled in the art to fully understand the present disclosure and are not intended to limit the subject matter defined in the claims.

The "ranges" disclosed in the present disclosure are defined in the form of lower and upper limits. A given range is defined by selecting a lower limit and an upper limit, and the selected lower and upper limits define the boundaries of the particular range. The range defined in this way may include or exclude end values, and may be arbitrarily combined, that is, any lower limit can be combined with any upper limit to form a range. For example, if ranges of 60-120 and 80-110 are listed for a particular parameter, it is to be understood that ranges of 60-110 and 80-120 are also expected. In addition, if the minimum range values 1 and 2 are listed, and if the maximum range values 3, 4, and 5 are listed, the following ranges can all be expected: 1-3, 1-4, 1-5, 2-3, 2-4, and 2-5. In the present disclosure, unless otherwise specified, the numerical value range "a-b" represents an abbreviated representation of any combination of real numbers between a and b, where a and b are both real numbers. For example, the numerical range "0-5" means that all real numbers between 0-5 are listed herein, and "0-5" is merely an abbreviated representation of the combination of these numbers. In addition, when a parameter is expressed as an integer ≥2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present disclosure may be combined with each other to form new technical solutions.

Unless otherwise specified, all technical features and optional technical features of the present disclosure may be combined with each other to form new technical solutions.

Unless otherwise specified, all the steps in the present disclosure can be carried out, either in order or randomly, preferably in order. For example, the method including steps (a) and (b) indicates that the method may include steps (a) and (b) performed sequentially, or the method may include steps (b) and (a) performed sequentially. For example, reference to "the method may further include step (c)" indicates that step (c) may be added to the method in any order, e.g., the method may include steps (a), (b) and (c), or steps (a), (c) and (b), or steps (c), (a) and (b), or the like.

Unless otherwise specified, the terms such as "include", " comprise", and their variants mentioned in the present disclosure may be open-ended or closed-ended. For example, "include" and "comprise" may mean that other components not listed may or may not further be included or comprised.

Unless otherwise specified, the term "or" is inclusive in the present disclosure. For example, a phrase "A or B" means "A, B, or both A and B" More specifically, any one of the following conditions satisfies the condition "A or B": A is true (or exists) and B is false (or does not exist); A is false (or does not exist) and B is true (or exists); or both A and B are true (or exist).

In the existing technology, in order to improve the efficiency of a process of coating an electrode plate, a coating speed or a drying speed is usually increased. However, at a high coating speed or a drying speed, the micro-powder in the negative electrode active material easily migrates to the surface of the electrode plate with the volatilization of the solvent (that is, the micro-powder floats up). This causes the floating-up micro-powder to block the pores on the surface of the negative electrode plate, affecting the wettability of the electrolyte solution for the negative electrode plate. A liquid absorption rate of the electrode plate decreases. In a cycle process, the electrolyte solution cannot be absorbed in some areas of the electrode plate in time, which may disable the active ions from being effectively inserted into the negative electrode plate, to cause phenomena of local polarization and uneven current distribution. Consequently, black speckles appear on the surfaces of the electrode plate, and by-products accumulate, along with other side reactions, to further block the pores, which may cause lithium plating on the electrode plate, to reduce the capacity retention rate of the battery and shorten the service life of the battery.

### [Graphite negative electrode active material]

The present disclosure provides a graphite negative electrode active material, where a volume distribution particle size Dv1 of the graphite negative electrode active material ranges from 1.5 micrometers (µm) to 3 µm; and the graphite negative electrode active material includes a primary particle morphology.

In some implementations, a volume distribution particle size Dv1 of the graphite negative electrode active material is 1.5 µm, 1.6 µm, 1.7 µm, 1.8 µm, 1.9 µm, 2.0 µm, 2.1 µm, 2.2 µm, 2.3 µm, 2.4 µm, 2.5 µm, 2.6 µm, 2.7 µm, 2.8 µm, 2.9 µm, 3 µm, or a value in a range formed by any two of the above points.

The volume distribution particle size Dv1 of the graphite negative electrode active material indicates the corresponding particle size at which the cumulative volume distribution percentage of the material reaches 1%.

Dv1 of the graphite negative electrode active material may be tested by using a method known in the art. For example, with reference to GB/T 19077-2016, a Malvern laser particle size analyzer is used for a representation test, for example, a Malvern instrument such as Mastersizer-3000 is used for the test.

The graphite negative electrode active material has a large volume distribution particle size Dv1, and the graphite negative electrode active material has a relatively small content of micro-powder, which can effectively reduce a phenomenon that the micro-powder floats up in a coating or drying process, improve a liquid absorption rate of the negative electrode plate, and improve wettability of an electrolyte solution for the negative electrode plate, so that the electrolyte solution can fully wet the negative electrode plate in a lithium de-intercalation process, to reduce a possibility of occurrence of local polarization. In this way, the current of the negative electrode plate is evenly distributed in the cycle process, reducing a possibility of occurrence of a side reaction on the interface of the negative electrode in the cycle process, and reducing an impact of a phenomenon of blocking pores by a by-product generated by the side reaction on the cycle performance of the battery. If the volume distribution particle size Dv1 of the graphite negative electrode active material is excessively large, and the content of micro-powder between the particles is excessively small, electrical contact between the particles cannot be effectively maintained. Therefore, the dynamic performance of the battery is affected, leading to occurrence of a lithium plating phenomenon, and further, the cycle performance of the battery is affected.

In this specification, the "primary particle" is also referred to as a single particle, and generally refers to a non-aggregated particle. The primary particle may be confirmed by using a scanning electron microscope (SEM) image.

The graphite negative electrode active material includes primary particles. The primary particles have excellent structural stability, which helps to reduce the crushing of the structure caused by the expansion and contraction of the graphite negative electrode active material in a cycle process, improve the structural stability of the graphite negative electrode active material, and further improve the cycle performance of the secondary battery.

In conclusion, in the present disclosure, by limiting the volume distribution particle size Dv1 of the graphite negative electrode active material and the particle type of the graphite negative electrode active material, the cycle performance of the battery can be effectively improved, and the service life of the battery can be prolonged.

In some implementations, a specific surface area of the graphite negative electrode active material is less than or equal to 1.4 meters²/gram (m²/g).

In some implementations, a specific surface area of the graphite negative electrode active material is any value of 0.4 m²/g, 0.5 m²/g, 0.6 m²/g, 0.7 m²/g, 0.75 m²/g, 0.85 m²/g, 0.85 m²/g, 1.05 m²/g, 1.15 m²/g, 1.25 m²/g, 1.3 m²/g, and 1.4 m²/g, or in a range formed by any two of the values.

The specific surface area of the graphite negative electrode active material may be tested by using an instrument and a method that are known in the art. For example, with reference to GB/T 19587-2017, a nitrogen adsorption specific surface area analysis test method may be used for testing, and a BET (Brunauer Emmett Teller) method is used for calculation, where the nitrogen adsorption specific surface area analysis test can be implemented with a Tri-Star 3020 type specific surface area analysis tester available from Micromeritics company, the United States.

The graphite negative electrode active material has a low specific surface area, so that the material has a low surface activity. Therefore, consumption of active ions by a side reaction between the graphite negative electrode active material and an electrolyte solution can be reduced, and cycle performance and storage stability of the battery can be improved.

In some implementations, a specific surface area of the graphite negative electrode active material ranges from 0.6 m²/g to 1.3 m²/g.

In some implementations, a specific surface area of the graphite negative electrode active material is any value of 0.6 m²/g, 0.7 m²/g, 0.75 m²/g, 0.85 m²/g, 0.85 m²/g, 1.05 m²/g, 1.15 m²/g, 1.25 m²/g, and 1.3 m²/g, or in a range formed by any two of the values.

As described above, the graphite negative electrode active material has a small specific surface area, which can reduce consumption of active ions by a side reaction between the graphite negative electrode active material and an electrolyte solution, and improve the cycle performance and storage stability of the battery. However, if the specific surface area is excessively small, wettability of the electrolyte solution for the electrode plate is affected, and the dynamic performance of the electrode plate is affected, and a phenomenon of lithium plating easily occurs, affecting the cycle life and storage performance of the battery. The specific surface area in a suitable range can further improve the cycle life and storage performance of the battery.

In some implementations, a volume distribution particle size Dv50 of the graphite negative electrode active material ranges from 12 µm to 16 µm.

In some implementations, a volume distribution particle size Dv50 of the graphite negative electrode active material is any value of 12 µm, 12.5 µm, 13 µm, 13.5 µm, 14 µm, 14.5 µm, 15 µm, 15.5 µm, and 16 µm, or in a range formed by any two of the values.

The volume distribution particle size Dv50 of the graphite negative electrode active material indicates the corresponding particle size at which the cumulative volume distribution percentage of the material reaches 50%, which can be measured by instruments and methods known in the art. For example, with reference to the GB/T 19077-2016 particle size distribution laser diffraction method, a Malvern laser particle size analyzer is used for a representation test, for example, a Malvern instrument such as Mastersizer-3000 is used for the test.

The graphite negative electrode active material has a large volume distribution particle size Dv50, helping to form a proper channel structure between particles of the negative electrode film layer, helping the electrolyte solution to fully wet the negative electrode plate, reducing a possibility of partial polarization of the electrode plate, and reducing impact of a black speckle phenomenon on the cycle life and storage performance of the battery.

In some implementations, a volume distribution particle size Dv50 of the graphite negative electrode active material ranges from 13 µm to 15 µm.

In some implementations, a volume distribution particle size Dv50 of the graphite negative electrode active material is any value of 13 µm, 13.5 µm, 14 µm, 14.5 µm, and 15 µm, or in a range formed by any two of the values.

The graphite negative electrode active material has a suitable volume distribution particle size Dv50, helping to form a proper channel structure between particles of the negative electrode film layer, helping the electrolyte solution to fully wet the negative electrode plate, reducing a possibility of partial polarization of the electrode plate, and reducing impact of a black speckle phenomenon on the cycle life and storage performance of the battery; and also helping to improve transport performance of active ions and electrons. The electrode plate has excellent dynamic performance, to reduce impact of a lithium plating phenomenon on the life and the storage performance of the battery.

In some implementations, based on a total quantity of particles of the graphite negative electrode active material, a quantity proportion of primary particles is greater than or equal to 80%.

In some implementations, based on a total quantity of the graphite negative electrode active material, a quantity proportion of primary particles in the graphite negative electrode active material ranges from 85% to 100%.

In some implementations, based on a total quantity of particles of the graphite negative electrode active material, a quantity proportion of primary particles in the graphite negative electrode active material is any value of 80%, 85%, 90%, 95%, and 100%, or in a range formed by any two of the values.

In some implementations, particles in the graphite negative electrode active material include primary particles and secondary particles. In this specification, the "secondary particle" refers to an agglomerated particle formed after a plurality of original particles or primary particles are agglomerated. The action force for the particles to agglomerate may be to assist the agglomeration by using another substance (for example, a sticky chemical substance).

The quantity proportion of primary particles may be measured in the art by using an instrument and a method known in the art. An example is as follows: the graphite negative electrode active material may be laid on and attached to a conductive adhesive, to form a to-be-tested sample whose length×width is 6 centimeters (cm)×1.1 cm. Morphology of particles in the to-be-tested sample is tested by using a scanning electron microscope and a spectrometer (for example, ZEISS SEM(sigma300)). For the test, reference may be made to JY/T010-1996. To ensure accuracy of a test result, a plurality (for example, 10 or 20) of different regions may be randomly selected from the to-be-tested sample to perform a scanning test, and at a magnification (for example, 500 or 1000), statistics on quantities of primary particles and total quantities of particles in the test regions are collected. A ratio of the quantity of primary particles to the total quantity of particles in any test region is a quantity proportion of primary particles in the region, and an average value of test results of 10 test regions is used as a quantity proportion of primary particles. To ensure accuracy of the result, a plurality of to-be-tested samples (for example, 5 or 10) may also be prepared to repeat the foregoing test, and an average value of test results of the to-be-tested samples is used as a quantity proportion of primary particles in the graphite negative electrode active material.

Within this range, the primary particles help to reduce the crushing of the structure of the active material caused by the expansion and contraction of the graphite negative electrode active material in a cycle process, improve the structural stability of the graphite negative electrode active material, and further improve the cycle stability and the storage stability of the secondary battery.

In some implementations, a gram capacity of the graphite negative electrode active material is greater than or equal to 340 milliampere-hour/gram (mAh/g).

In some embodiments, a gram capacity of the graphite negative electrode active material is any value of 340 mAh/g, 341 mAh/g, 342 mAh/g, 343 mAh/g, 344 mAh/g, 345 mAh/g, 346 mAh/g, 347 mAh/g, 349 mAh/g, 350 mAh/g, 351 mAh/g, and 352 mAh/g, or in a range formed by any two of the values.

The measurement method for the gram capacity may be any method known in the art. For example, a sample of the graphite negative electrode active material, a conductive agent: carbon black, and polyvinylidene fluoride (PVDF) may be thoroughly stirred and mixed in an appropriate amount of solvent NMP according to a mass ratio of 91.6:1.8:6.6, to form a uniform negative electrode slurry. The negative electrode slurry was uniformly applied to a surface of a copper foil, which acted as a negative electrode current collector, followed by drying and cold pressing. Then, a lithium metal sheet is used as a counter electrode, a polypropylene (PP) film is used as a separator, and an electrolyte solution is injected. A formula of the used electrolyte solution is as follows: Dimethyl carbonate (DMC), ethyl methyl carbonate (EMC), and ethylene carbonate (EC) were mixed at a weight ratio of 1:1:1 to obtain an organic solvent, and then LiPF₆ was dissolved in the organic solvent to prepare an electrolyte solution with a concentration of 1.0 mole per liter (mol/L). In an argon-protected glove box, a CR2430 button battery was assembled. At 25 degrees Celsius (°C), the foregoing prepared button battery is first discharged at a constant current of 0.05 coulomb (C) to 0.005 volt (V), then discharged at a constant current of 10 microampere (µA) to 0.005V, and allowed to stand for 5 minutes (min), and the first-circle discharging capacity of the button battery is recorded. Then, the battery is charged to 2.0V at a constant current of 0.1C, and the charging capacity of the button-type battery is recorded. A ratio of the charging capacity of the button battery to the mass of the sample of the graphite negative electrode active material is a gram capacity of the graphite negative electrode active material.

The graphite negative electrode active material has a high gram capacity, to provide a material basis for a battery with a high energy density.

In some implementations, a gram capacity of the graphite negative electrode active material ranges from 341 mAh/g to 347 mAh/g. In some implementations, a gram capacity of the graphite negative electrode active material is any value of 341 mAh/g, 342 mAh/g, 343 mAh/g, 344 mAh/g, 345 mAh/g, 346 mAh/g, and 347 mAh/g, or in a range formed by any two of the values.

The gram capacity of the graphite negative electrode active material is within a suitable range, which can improve the energy density of the battery. In addition, the gram capacity of the graphite negative electrode active material falls within the range, and the particle strength thereof is high, reducing a possibility that the particles tend to be flat during a cold pressing process of the electrode plate, and avoiding significantly lengthening of a transport path of an electrolyte solution during the cold pressing process, helping to reduce the tortuosity of the negative electrode plate, facilitating circulation of the electrolyte solution, improving a wetting effect of the electrolyte solution on the electrode plate, and improving the cycle performance and storage performance of the battery.

In some implementations, a tap density of the graphite negative electrode active material ranges from 1.2 grams/centimeter³ (g/cm³) to 1.4 g/cm³.

In some implementations, a tap density of the graphite negative electrode active material is 1.2 g/cm³, 1.25 g/cm³, 1.3 g/cm³, 1.35 g/cm³, or 1.4 g/cm³ or a value in a range formed by any two of the above points.

In this specification, the term "tap density" refers to a density of a powder material after being vibrated and compressed under a specific condition.

The measurement method for the tap density may be any method known in the art. For example, measurement can be made by using a powder tap density tester with reference to GB/T 5162-2006. The test instrument may be Dandong Bettersize BT-301. The test parameters are as follows: vibration frequency 250 ± 15 times/minute, amplitude 3 ± 0.2 millimeters (mm), vibration count 5000, and graduated cylinder 25 milliliters (mL).

The case that the tap density of the graphite negative electrode active material falls within the foregoing range helps to form a suitable channel structure between particles of the negative electrode film layer, thereby improving wettability of the electrolyte solution for the negative electrode plate, and improving the cycle performance and storage performance of the secondary battery. In addition, a suitable tap density may further improve a compaction density of the negative electrode film layer, and further improve the energy density of the secondary battery.

In some implementations, a particle size distribution (Dv90-Dv10)/Dv50 of the graphite negative electrode active material ranges from 1.20 to 1.70. In some implementations, (Dv90-Dv10)/Dv50 of the graphite negative electrode active material is any value of 1.20, 1.30, 1.40, 1.50, 1.60, and 1.70, or in a range formed by any two of the values.

In some implementations, a particle size distribution (Dv90-Dv10)/Dv50 of the graphite negative electrode active material ranges from 1.35 to 1.60. In some implementations, (Dv90-Dv10)/Dv50 of the graphite negative electrode active material is any value of 1.35, 1.45, 1.55, and 1.60, or in a range formed by any two of the values.

The volume distribution particle sizes Dv10, Dv50, and Dv90 of the graphite negative electrode active material respectively indicate the corresponding particle sizes at which the cumulative volume distribution percentage of the material reaches 10%, 50%, and 90%, which may be tested by using a method known in the art. For example, with reference to GB/T 19077-2016, a Malvern laser particle size analyzer is used for a representation test, for example, a Malvern instrument such as Mastersizer-3000 is used for the test.

That the particle size distribution of the graphite negative electrode active material falls within the range helps to increase the concentration of particle sizes of the graphite negative electrode active material, increase the arrangement concentration of the particles, reduce the tortuosity of the negative electrode plate, and shorten the transport path of the electrolyte solution, to cause the electrolyte solution to fully wet the negative electrode plate, thereby improving the cycle performance of the battery; and can further reduce uneven distribution of active ions in the graphite negative electrode active material caused by a relatively large particle size difference, reduce a side reaction between the graphite negative electrode active material having a smaller particle size and the electrolyte solution, and improve the cycle performance and the storage performance of the secondary battery. In addition, the particle size distribution of the graphite negative electrode active material is in the foregoing range, and the particle packing performance thereof is relatively good, to help to improve the compaction density of the negative electrode film layer, thereby further improving the energy density of the secondary battery.

The present disclosure further provides a preparation method for a graphite negative electrode active material, including the following steps: providing a raw material; treating the raw material to obtain a precursor; performing graphitization treatment on the precursor to obtain an intermediate product; and performing sieving treatment on the intermediate product to obtain a graphite negative electrode active material, where a volume distribution particle size Dv1 of the graphite negative electrode active material ranges from 1.5 µm to 3 µm; and the graphite negative electrode active material includes a primary particle morphology.

By using the foregoing preparation method, a graphite negative electrode active material having a volume distribution particle size Dv1 within a suitable range and including primary particles can be prepared, which can further improve the cycle performance of the battery and prolong the service life of the battery.

In some implementations, the raw material includes at least one of petroleum coke, needle coke, and pitch coke.

In this specification, the term "petroleum coke" refers to coke formed after high-temperature carbonization is performed on petroleum residue or petroleum pitch.

In this specification, the term "needle coke" refers to needle-textured coke that can be generated after coal tar pitch or petroleum pitch is subject to liquid-phase carbonization to generate an anisotropic intermediate phase, and then the anisotropic intermediate phase is subject to processes such as high-temperature carbonization.

In this specification, the term "pitch coke" refers to a solid material generated after coal tar pitch is subject to high-temperature carbonization.

In some implementations, the raw material includes petroleum coke.

The petroleum coke has excellent anisotropy, which helps to prepare a graphite material with a low graphite degree and low expansion, and is beneficial to a long cycle life of the battery. In addition, the petroleum coke has a high compaction density and a high gram capacity, which helps to improve the energy density of the battery. In addition, the petroleum coke has a wider source, which is beneficial to industrial production.

The foregoing raw material usually includes at least one of a mosaic structure, a regional structure, and a fibrous structure. Usually, according to morphological features and sizes of isochromatic zones of the coke material under a polarization microscope, a microscopic structure of the isochromatic zone whose size is less than 30 µm is determined as a mosaic structure, a microscopic structure of the isochromatic zone whose size is greater than 30 µm is determined as a regional structure, and an anisotropic banded isochromatic zone is determined as a fibrous structure.

In some implementations of the present disclosure, based on a total volume of structures of the raw material, a volume proportion of a mosaic structure and a regional structure in the raw material is greater than or equal to 60%. In some embodiments, based on a total volume of structures of the raw material, a volume proportion of a mosaic structure and a regional structure in the raw material ranges from 65% to 80%.

In the present disclosure, the volume proportions of the mosaic structure and the regional structure in the raw material may be tested by using a method known in the art. As an example, the raw material is taken according to GB 1997-89, the raw material crushed to 1mm is uniformly mixed, shrunk to obtain 40 grams (g) to 50g, and a sample of 4g to 5g at a level of 0.07mm to 1.0mm is sifted by using a square hole for sheet making. Powder coke and nut coke light sheets are prepared according to the stipulation of MT 116.1-86, the diameter of the powder coke light sheet should not be less than 22 mm, and the volume occupied by a cement should be less than 1/3. The sample is placed on a slide with mastic cement, flattened, and then placed on a stage for focusing. After the microscope is corrected, the polarizer and the analyzer are adjusted to be orthogonal to each other. An azurite plate (1λ) is inserted, so that a visual field presents an interference color of first-order red. The movement rule step length is determined to ensure that more than 400 valid test points are evenly distributed. Advisably, a point distance ranges from 0.3mm to 0.5mm, and a row distance usually ranges from 0.5mm to 0.8mm. Starting from one end of the sample, a microscopic structure type of a reticle intersection point is determined, and the quantity of valid test points of an optical texture of the mosaic and regional structures divided by the total quantity of counted test points is used as a volume proportion of the mosaic and regional structures in the raw material.

In some implementations, the treating the raw material specifically includes the following steps:
crushing, shaping, and classifying the raw material, to obtain a precursor; and
removing a proportion of fine powder in a process of the classifying, where
based on a total mass of the raw material, a mass proportion of the removed fine powder ranges from 10% to 35%; and a volume distribution particle size Dv50 of the fine powder ranges from 3 µm to 7 µm, and (Dv90-Dv10)/Dv50 of the fine powder is greater than 1.6.

In some embodiments, based on a total mass of the raw material, a mass proportion of the removed fine powder is any value of 10%, 15%, 20%, 25%, 30%, and 35%, or in a range formed by any two of the values.

By controlling the mass proportion of the removed fine powder to be in a suitable range, the volume distribution particle size Dv1 of the graphite negative electrode active material can be controlled to be in a suitable range, which not only enables the electrode plate to have an excellent liquid absorption rate, and enables the electrolyte solution to fully wet the negative electrode plate, but also enables the graphite particles to have excellent electrical contact with each other, thereby comprehensively improving the cycle performance of the battery.

In some embodiments, in the step of performing the crushing treatment on the raw material, a crusher, such as a jaw crusher, may be used to perform the crushing treatment on the raw material. For example, the raw material may be first crushed to a set particle size and then is subject to sieving treatment.

In some embodiments, in the step of performing the shaping treatment on the raw material, a shaper may be used to perform the shaping treatment on the crushed raw material. The shaping treatment can reduce burr on a surface of the crushed raw material, which helps to obtain a rounded graphite negative electrode active material, and helps to improve a compaction density of the negative electrode film layer.

In some embodiments, in the step of classifying the raw material, an air classifier may be used to classify the shaped raw material. In some embodiments, the air induction frequency may be greater than or equal to 20 hertz (Hz), and the classifying frequency may be greater than or equal to 65 Hz. The classifying treatment can reduce the content of large particles and small particles in the precursor.

In some implementations, a maximum power of the graphitization treatment is 70% to 90% of a rated power of a graphitization treatment device.

In some embodiments, a maximum power of the graphitization treatment is 70%, 75%, 80%, 85%, or 90% of a rated power of a graphitization treatment device, or in a value range between any two thereof. It may be understood that the graphitization treatment device refers to any apparatus capable of performing graphitization treatment, and includes, but is not limited to, apparatuses such as an Acheson furnace, a box furnace, a lengthwise graphitization furnace, a continuous graphitization furnace, an electric calcining furnace, an intermediate frequency furnace, and a tube furnace. Rated powers of graphitization treatment devices produced by different manufacturers may be different and may be selected according to an actual situation.

The maximum power of the graphitization treatment used in the present disclosure needs to be lower than the rated power of the graphitization treatment device, so as to achieve temperature field uniformity in the graphitization treatment process. Ensuring consistency of gram capacities of materials helps to improve the cycle life of the battery.

In some implementations, the graphitization treatment device is a lengthwise graphitization furnace, and a rated power of the lengthwise graphitization furnace ranges from 25000 watts (W) to 32000 W.

In some implementations, the graphitization treatment device is an Acheson furnace, and a rated power of the Acheson furnace ranges from 28000 W to 30000 W.

In some implementations, the maximum power of the graphitization treatment ranges from 23000 W to 25000 W, and may be, for example, 23000 W, 23500 W, 24000 W, 24500 W, or 25000 W, or in a value range between any two thereof.

In some implementations, a constant power time of the graphitization treatment at the maximum power ranges from 10 hours (h) to 50 h.

In some implementations, a constant power time of the graphitization treatment at the maximum power is 10 h, 13 h, 16 h, 19 h, 22 h, 25 h, 28 h, 31 h, 33 h, 36 h, 39 h, 42 h, 45 h, 48 h, or 50 h, or in a value range between any two thereof.

In some implementations, the graphitization treatment device is a lengthwise graphitization furnace, and a constant power time of the graphitization treatment at the maximum power ranges from 10 h to 30 h.

In some implementations, the graphitization treatment device is an Acheson furnace, and a constant power time of the graphitization treatment at the maximum power ranges from 30 h to 50 h.

A proper constant power time of the graphitization treatment at the maximum power does not easily cause excessive rearrangement of the precursor, which causes a relatively high specific surface area of the graphite material subject to graphitization treatment, to deteriorate the cycle performance; and can further effectively improve the gram capacity of the graphite material, thereby facilitating synchronous improvement of the energy density and the cycle life of the secondary battery.

In some implementations, a volume distribution particle size Dv50 of the precursor ranges from 12 µm to 18 µm. In some implementations, a volume distribution particle size Dv50 of the precursor is 12 µm, 13 µm, 14 µm, 15 µm, 16 µm, 17 µm, or 18 µm, or in a value range between any two thereof.

In some implementations, a particle size distribution (Dv90-Dv10)/Dv50 of the precursor ranges from 1.2 to 1.8. In some implementations, a particle size distribution (Dv90-Dv10)/Dv50 of the precursor is 1.2, 1.3, 1.4, 1.5, 1.6, 1.7, or 1.8, or in a value range between any two thereof.

Controlling the volume distribution particle size Dv50 or the particle size distribution of the precursor to be within a suitable range helps the volume distribution particle size Dv50 and the specific surface area of the graphite negative electrode active material to be within suitable ranges, to obtain a graphite negative electrode active material having excellent cycle stability and storage stability, thereby helping to improve the cycle life and the storage performance of the battery.

In addition, a secondary battery, a battery module, a battery pack and a power consuming apparatus in the present disclosure are described below with appropriate reference to the accompanying drawings.

An embodiment of the present disclosure provides a secondary battery.

Generally, the secondary battery includes a positive electrode plate, a negative electrode plate, an electrolyte, and a separator. During the charging and discharging process of the battery, active ions are intercalated and de-intercalated back and forth between the positive electrode plate and the negative electrode plate. An electrolyte achieves an ion conducting effect between the positive electrode plate and the negative electrode plate. The separator is disposed between the positive electrode plate and the negative electrode plate to mainly play a role in preventing a short circuit between a positive electrode and a negative electrode while allowing ions to pass through.

### [Negative electrode plate]

The negative electrode plate includes a negative electrode current collector and a negative electrode film layer arranged on at least one surface of the negative electrode current collector, and the negative electrode film layer includes a graphite negative electrode active material in any implementation or prepared by using a preparation method in any implementation.

In some implementations, the compaction density of the negative electrode film layer ranges from 1.35 g/cm³ to 1.65 g/cm³. In some implementations, the compaction density of the negative electrode film layer is 1.35 g/cm³, 1.40 g/cm³, 1.45 g/cm³, 1.50 g/cm³, 1.55 g/cm³, 1.60 g/cm³, or 1.65 g/cm³, or in a value range between any two thereof.

In the present disclosure, the compaction density of the negative electrode film layer can be tested using methods known in the art. As an example, an electronic balance is used to weigh a test sample of a negative electrode plate whose area is S, the weight is recorded as W1, and a thickness T1 of the negative electrode plate is measured by using a micrometer. Then, the film layer of the weighed electrode plate is wiped off, the weight of the negative current collector is measured and recorded as W2, and the thickness T2 of the negative current collector is measured by using a micrometer. Therefore, the compaction density PD of the negative electrode film layer = (W1-W2)/[(T1-T2) × S].

The negative electrode film layer has a high compaction density, which can improve the energy density of the battery. However, a high compaction density causes small pores of the negative electrode plate, and graphite micro-powder blocks the pores, affecting wettability of the electrolyte solution for the electrode plate. In the present disclosure, by controlling the volume distribution particle size Dv1 of the graphite negative electrode active material, the impact of the high compaction density on the wettability for the electrode plate can be effectively compensated, and on the premise that the battery has a high energy density, the wettability for the electrode plate is improved, and the cycle life of the battery is improved.

In some implementations, the compaction density of the negative electrode film layer ranges from 1.40 g/cm³ to 1.55 g/cm³. In some implementations, the compaction density of the negative electrode film layer is 1.40 g/cm³, 1.45 g/cm³, 1.50 g/cm³, or 1.55 g/cm³, or in a value range between any two thereof.

The compaction density of the negative electrode film layer is in a suitable range, so that the negative electrode film layer has a suitable quantity of pores, and the electrolyte solution has good wettability for the negative electrode plate, reducing a possibility of occurrence of local polarization, and improving the cycle performance and storage performance of the battery. In another aspect, the compaction density in a suitable range also ensures that the battery has a certain energy density.

In some implementations, the areal density of the negative electrode film layer ranges from 7 milligrams/centimeter² (mg/cm²) to 14 mg/cm². In some implementations, the areal density of the negative electrode film layer is 7 mg/cm², 8 mg/cm², 9 mg/cm², 10 mg/cm², 11 mg/cm², 12 mg/cm², 13 mg/cm², or 14 mg/cm², or in a value range between any two thereof.

In some implementations, the areal density of the negative electrode film layer ranges from 9 mg/cm² to 12 mg/cm². In some implementations, the areal density of the negative electrode film layer is 9 mg/cm², 10 mg/cm², 11 mg/cm², or 12 mg/cm², or in a value range between any two thereof.

The areal density of the negative electrode film layer can be tested using any method and device known in the art. As an example, a cold-pressed negative electrode plate is taken and is punched into a small disc whose area is S1, and the weight of the small disc is measured, and is recorded as M1. Then, the negative electrode film layer of the weighted negative electrode plate is wiped off, the weight of the negative current collector is measured, and is recorded as M0. The areal density of the negative electrode film layer = (the weight M1 of the negative electrode plate - the weight M0 of the negative current collector)/S1.

The areal density of the negative electrode film layer is within a suitable range, and the thickness of the negative electrode plate is suitable. In one aspect, the distance for the electrolyte solution to transversely wet the electrode plate is relatively short, the tortuosity of the electrode plate is relatively small, and the time required for the electrolyte solution to completely wet the negative electrode plate is also relatively short, thereby reducing the possibility of occurrence of local polarization and improving the cycle performance of the battery. In the other aspect, the areal density within a suitable range also ensures that the battery has a particular energy density.

In an example, the negative electrode current collector has two opposite surfaces in a thickness direction of the negative electrode current collector, and the negative electrode film layer is disposed on either or both of the two opposite surfaces of the negative electrode current collector.

In some implementations, the negative electrode current collector may be a metal foil or a composite current collector. For example, as the metal foil, a copper foil may be used. The composite current collector may include a polymer material undercoating and a metal layer formed on at least one surface of a polymer material substrate. The composite current collector may be formed by forming a metal material (copper, copper alloy, nickel, nickel alloy, titanium, titanium alloy, silver, silver alloy, or the like) on the polymer material substrate (for example, a substrate of polypropylene(PP), polyethylene terephthalate (PET), polybutylene terephthalate (PBT), polystyrene (PS), or polyethylene (PE)).

In some embodiments, the negative electrode film layer may further include another negative electrode active material other than the foregoing graphite negative electrode active material. In some embodiments, the another negative electrode active material includes, but is not limited to, one or more of conventional natural graphite, artificial graphite, soft carbon, hard carbon, a silicon-based material, a tin-based material, and lithium titanate. The silicon-based material may include one or more of elemental silicon, silicon oxide, a silicon-carbon composite, a silicon-nitrogen composite, and a silicon alloy material. The tin-based material may include one or more of elemental tin, tin oxide, or a tin alloy material.

In some implementations, the negative electrode film layer further includes a binder. The binder is at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some implementations, the negative electrode film layer further includes a conductive agent. The conductive agent is at least one of superconducting carbon, acetylene black, carbon black, Ketjen black, carbon dots, carbon nanotubes, graphene, and carbon nanofibers.

In some implementations, the negative electrode film layer further includes another adjuvant such as a thickener (for example, sodium carboxymethyl cellulose (CMC-Na)).

In some implementations, the negative electrode plate may be prepared in the following manner: dispersing the foregoing components for preparing the negative electrode plate, for example, the graphite negative electrode active material, the conductive agent, the binder, and any other components, in a solvent (for example deionized water) to form a negative electrode slurry; and coating the negative electrode slurry on the negative electrode current collector, followed by processes such as drying and cold pressing, to obtain the negative electrode plate.

### [Positive electrode plate]

The positive electrode plate includes a positive electrode current collector and a positive electrode film layer arranged on at least one surface of the positive electrode current collector, and the positive electrode film layer includes the positive electrode active material of the first aspect of the present disclosure.

In an example, the positive electrode current collector has two opposite surfaces in a thickness direction of the positive electrode current collector, and the positive electrode film layer is disposed on either or both of the two opposite surfaces of the positive electrode current collector.

In some implementations, the positive electrode current collector may be a metal foil or a composite current collector. For example, as the metal foil, an aluminum foil may be used. The composite current collector may include a polymer material base layer or a metal layer located on at least one surface of the polymer material base layer. The composite current collector may be formed by forming a metal material (aluminum, an aluminum alloy, nickel, a nickel alloy, titanium, a titanium alloy, silver, a silver alloy, or the like) on the polymer material substrate (for example, a substrate of polypropylene (PP), polyethylene terephthalate (PET), polybutylene terephthalate (PBT), polystyrene (PS), or polyethylene (PE)).

In some implementations, the positive electrode active material may be a positive electrode active material used for a battery and well known in the art. For example, the positive electrode active material may include at least one of the following materials: a lithium-containing phosphate with an olivine structure, a lithium transition metal oxide, and respective modified compounds thereof. However, the present disclosure is not limited to these materials. Other traditional materials that can be used as positive electrode active materials for batteries may alternatively be used. These positive electrode active materials may be used alone or in combination of two or more. An example of the lithium transition metal oxide may include, but is not limited to, at least one of a lithium cobalt oxide (for example, LiCoO₂), a lithium nickel oxide (for example, LiNiO₂), a lithium manganese oxide (for example, LiMnO₂ or LiMn₂O₄), a lithium nickel cobalt oxide, a lithium manganese cobalt oxide, a lithium nickel manganese oxide, a lithium nickel cobalt manganese oxide (for example, LiNi_{1/3}Co_{1/3}Mn_{1/3}O₂ (which may also be referred to as NCM₃₃₃ for short)), LiNi_{0.5}Co_{0.2}Mn_{0.3}O₂ (which may also be referred to as NCM₅₂₃ for short), LiNi_{0.5}Co_{0.25}Mn_{0.25}O₂ (which may also be referred to as NCM₂₁₁ for short), LiNi_{0.6}Co_{0.2}Mn_{0.2}O₂ (which may also be referred to as NCM₆₂₂ for short), LiNi_{0.8}Co_{0.1}Mn_{0.1}O₂ (which may also be referred to as NCM₈₁₁ for short), a lithium nickel cobalt aluminum oxide (for example, LiNi_{0.85}Co_{0.15}Al_{0.05}O₂), and modified compounds thereof. Examples of the lithium-containing phosphate of the olivine structure may include, but are not limited to, at least one of lithium iron phosphate (e.g., LiFePO₄ (or briefly referred to as LFP)), a composite material of lithium iron phosphate and carbon, lithium manganese phosphate (e.g., LiMnPO₄), a composite material of lithium manganese phosphate and carbon, lithium iron manganese phosphate, and a composite material of lithium manganese iron phosphate and carbon.

In some implementations, the positive electrode film layer further includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some implementations, the positive electrode film layer further includes a conductive agent. As an example, the conductive agent may include at least one of superconducting carbon, acetylene black, carbon black, Ketjen black, carbon dots, carbon nanotubes, graphene, and carbon nanofibers.

In some implementations, the positive electrode plate may be prepared as follows: dispersing the above components for preparing the positive electrode plate, for example, the positive electrode active material, the conductive agent, the binder, and any other components, in a solvent (for example N-methylpyrrolidone) to form a positive electrode slurry; and coating the positive electrode slurry onto a positive electrode current collector, followed by processes such as drying and cold pressing, to obtain the positive electrode plate.

### [Electrolyte]

An electrolyte achieves an ion conducting effect between the positive electrode plate and the negative electrode plate. The type of the electrolyte is not specifically limited in the present disclosure and can be selected according to requirements. For example, the electrolyte can be liquid, gelled, or all solid.

In some implementations, the electrolyte is an electrolyte solution. The electrolyte solution includes an electrolyte salt and a solvent.

In some implementations, the electrolyte salt is at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium triflate, lithium difluorophosphate, lithium difluoro(oxalato)borate, lithium bis(oxalate)borate, lithium difluorobis(oxalato)phosphate, and lithium tetrafluoro(oxalato)phosphate.

In some implementations, the solvent is at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfoxide, and diethyl sulfone.

In some implementations, the electrolyte solution further includes additives. For example, the additive may include a negative electrode film forming additive, a positive electrode film forming additive, and may further include an additive that can improve particular battery performance, for example, an additive that improves battery overcharging performance, or an additive that improves high-temperature or low-temperature performance of the battery.

### [Separator]

In some implementations, the secondary battery further includes a separator. The type of the separator is not particularly limited in the present disclosure, and any well-known separator with a porous structure having good chemical stability and mechanical stability can be selected.

In some implementations, a material of the separator is at least one of glass fiber, non-woven fabric, polyethylene, polypropylene, and polyvinylidene fluoride. The separator can be either a single-layer thin film or a multi-layer composite thin film without special limitations. When the separator is a multi-layer composite thin film, the materials of the layers can be the same or different without special limitations.

In some implementations, an electrode assembly may be manufactured by a positive electrode plate, a negative electrode plate, and a separator by a winding process or a laminating process.

In some implementations, the secondary battery may include an outer package. The outer package can be used to encapsulate the above electrode assembly and electrolyte.

In some implementations, the outer package of the secondary battery may be a hard housing, for example, a hard plastic housing, an aluminum housing, or a steel housing. The outer package of the secondary battery may also be a soft package, for example, a pouch-type soft package. A material of the soft package may be plastic, and examples of the plastic may include polypropylene, polybutylene terephthalate, and polybutylene succinate.

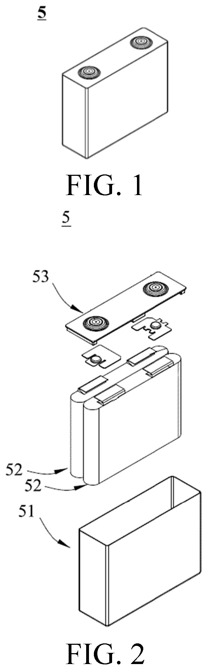

A shape of the secondary battery is not particularly limited in the present disclosure, and the secondary battery may be cylindrical, prismatic, or of any other shape. For example, FIG. 1 shows a secondary battery 5 of a cuboidal structure as an example.

In some implementations, referring to FIG. 2, an outer packaging may include a housing 51 and a cover plate 53. The housing 51 may include a bottom plate and a side plate connected to the bottom plate. The bottom plate and the side plate enclose an accommodating cavity. The housing 51 has an opening in communication with the accommodating cavity, and the cover plate 53 can cover the opening to close the accommodating cavity. The positive electrode plate, the negative electrode plate, and the separator may be made into an electrode assembly 52 by a winding process or a laminating process. The electrode assembly 52 is packaged in the accommodating cavity. The electrolyte solution infiltrates into the electrode assembly 52. A quantity of electrode assemblies 52 included in the secondary battery 5 may be one or more, and may be selected by those skilled in the art based on specific actual requirements.

In some implementations, the secondary battery may be assembled into a battery module. The quantity of the secondary batteries included in the battery module may be one or more. The specific quantity may be selected by those skilled in the art according to the application and capacity of the battery module.

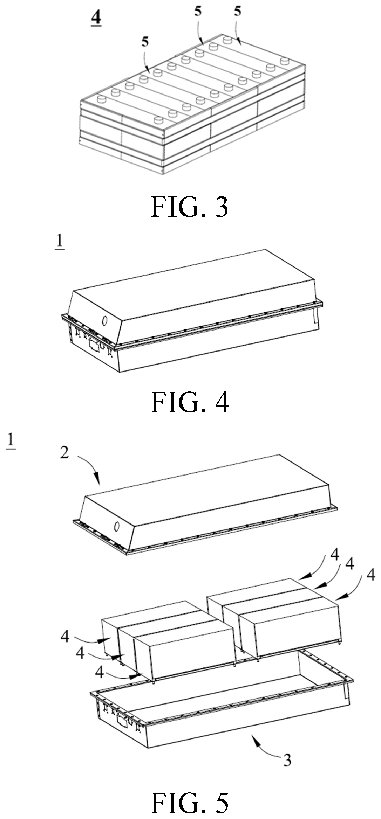

FIG. 3 shows a battery module 4 as an example. Referring to FIG. 3, in the battery module 4, a plurality of secondary batteries 5 may be sequentially arranged along a length direction of the battery module 4. Certainly, the secondary batteries may alternatively be arranged in any other manner. The plurality of secondary batteries 5 may further be fixed through a fastener.

In some embodiments, the battery module 4 may further include a shell with an accommodating space. The plurality of secondary batteries 5 may be accumulated in the accommodating space.

In some implementations, the battery module may further be assembled into a battery pack, the quantity of battery module included in the battery pack may be one or more, and the specific quantity may be selected by those skilled in the art according to the application and capacity of the battery pack.

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box 2 and a lower box 3. The upper box 2 can cover the lower box 3 to form a closed space for accommodating the battery modules 4. The plurality of battery modules 4 may be arranged in the battery box in any way.

In addition, the present disclosure further provides a power consuming apparatus, where the power consuming apparatus includes at least one of the secondary battery, the battery module, or the battery pack provided in the present disclosure. The secondary battery, battery module, or battery pack can be used as a power source for the power consuming apparatus, and can also be used as an energy storage unit for the power consuming apparatus. The power consuming apparatus may include a mobile device (for example, a mobile phone or a notebook computer), an electric vehicle (for example, a pure electric vehicle, a hybrid electric vehicle, a plug-in hybrid electric vehicle, an electric bicycle, an electric scooter, an electric golf cart, or an electric truck), an electric train, a ship, a satellite, an energy storage system, or the like, but is not limited thereto.

For the power consuming apparatus, the secondary battery, the battery module, or the battery pack can be selected according to the requirements during use.

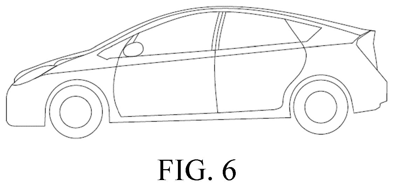

FIG. 6 show a power consuming apparatus as an example. The power consuming apparatus is an all-electric vehicle, a hybrid electric vehicle, a plug-in hybrid electric vehicle, or the like. To satisfy the need of the power consuming apparatus for a high power and high energy density of secondary batteries, a battery pack or a battery module can be used.

The apparatus as another example may be a mobile phone, a tablet computer, a laptop, and the like. The apparatus is generally required to be light and thin, and may use a secondary battery as a power source.

### Examples

Examples of the present disclosure are described below. The examples described below are illustrative, are merely used to explain the present disclosure, and should not be construed as a limitation to the present disclosure. Where no specific technologies or conditions are indicated in the embodiments, the technologies or conditions described in the literatures in the art or the instructions for the product are followed. The reagents or instruments without manufacturer indicated are all conventional products that may be purchased in the market.

### I. Preparation method

### Example 1

### (1) Preparation of a graphite negative electrode active material

A petroleum coke raw material whose mosaic and regional structures have a volume proportion of 60% was coarsely crushed, then the coarsely crushed material was crushed and sieved, and the sieved material was shaped and classified. A particular content of fine powder was removed in a process of the classifying, to obtain a precursor, where the mass of the removed fine powder accounts for 21% of the total mass of the petroleum coke raw material, the precursor has a volume distribution particle size Dv50 of 15.5 µm and a particle size distribution (Dv90-Dv10)/Dv50 of 1.50, and the fine powder refers to particles whose particle size Dv50 ranges from 3 µm to 7 µm and whose particle size distribution (Dv90-Dv10)/Dv50 is greater than 1.6.

Graphitization treatment was performed on the precursor by using an Acheson furnace, where a temperature of the graphitization treatment is 2800 °C, a maximum power used for the graphitization treatment is 24000 W (which refers to an actual use power of the Acheson furnace, and occupies approximately 85% of a rated power of the Acheson furnace), and after continuous treatment was performed by keeping the power unchanged for 40 h, a temperature of a surface of a graphite crucible of the Acheson furnace was reduced to 300 °C, to obtain an intermediate product.

The obtained intermediate product was sieved and demagnetized, to obtain a graphite negative electrode active material. The graphite negative electrode active material mainly includes primary particles, and a content proportion of the primary particles in the material is approximately above 85%. For the graphite negative electrode active material, Dv1 = 2.0 µm, Dv50 = 14.3 µm, and BET = 1.1 m²/g.

### (2) Preparation of a negative electrode plate

The foregoing prepared graphite negative electrode active material, a conductive agent: Super P, a thickener: sodium carboxymethyl cellulose, and a binder: styrene-butadiene rubber SBR were mixed at a dry material mass ratio of 95.4:1.6:1.2:1.8, and then a solvent deionized water was added and stirred with a vacuum mixer until the system was uniform, to obtain a negative electrode slurry. The negative electrode slurry was uniformly applied to a copper foil, which acted as a negative electrode current collector, followed by drying, cold pressing, and slitting to obtain a negative electrode plate. The compaction density of the negative electrode film layer was 1.40 g/cm³. The areal density of the negative electrode film layer is 9.6 mg/cm².

### (2) Preparation of a positive electrode plate

A positive electrode active material: lithium iron phosphate (LFP), a conductive agent: Super P, and a binder: polyvinylidene fluoride were mixed in a mass ratio of 97:1:2, and a solvent of N-methylpyrrolidone was added and stirred with a vacuum mixer until the system was uniform, to obtain a positive electrode slurry. The positive electrode slurry was uniformly applied to an aluminum foil, which acted as a positive electrode current collector, followed by drying, cold pressing, and slitting to obtain a positive electrode plate. The compaction density of the positive electrode plate was 2.50 g/cm³. The areal density of the positive electrode plate is 19.7 mg/cm².

### 4) Preparation of an electrolyte solution

In an argon atmosphere glove box with a water content < 10 ppm, diethyl carbonate (DEC), ethyl methyl carbonate (EMC), and ethylene carbonate (EC) were mixed at a weight ratio of 1:1:1 to obtain an organic solvent, and then LiPF₆ was dissolved in the organic solvent to prepare an electrolyte solution with a concentration of 1.0 mol/L. Then, vinylene carbonate (VC) was added, where a content of VC is 2% of a total mass of the electrolyte solution.

### 5) Separator

A polypropylene film was used as the separator.

### 6) Preparation of a secondary battery

The positive electrode plate, the separator, and the negative electrode plate were laminated in sequence, so that the separator was located between the positive electrode plate and the negative electrode plate to separate the positive electrode plate from the negative electrode plate, and were wound to obtain an electrode assembly; the electrode assembly was placed in an outer package, and dried, then an electrolyte solution was injected, followed by processes such as vacuum packaging, standing, formation, and shaping, to obtain the lithium-ion battery.

Preparation methods in Examples 2 to 3 are substantially the same as that in Example 1, and a difference lies in that, the removed fine powder has different mass proportions, which is specifically shown in Table 1.

**Table 1**

| | Preparation parameter |
|---|---|
| Serial number | Proportion of removed fine powder |
| Example 1 | 21% |
| Example 2 | 15% |
| Example 3 | 31% |
| Comparative Example 1 | 7% |
| Comparative Example 2 | 39% |

Preparation methods in Examples 4 to 6 are substantially the same as that in Example 1, and a difference lies in that, the volume distribution particle size Dv50 of the precursor, the particle size distribution (Dv90-Dv10)/Dv50 of the precursor, and the constant power time of the graphitization treatment at the maximum power are adjusted, which is specifically shown in Table 2.

**Table 2**

| | Preparation parameter | | |
|---|---|---|---|
| Serial number | Volume distribution particle size Dv50 (µm) of the precursor | Particle size distribution (Dv90-Dv10)/Dv50 of the precursor | Constant power time (h) of the graphitization treatment at the maximum power |
| Example 1 | 15.5 | 1.5 | 40 |
| Example 4 | 16.4 | 1.2 | 30 |
| Example 5 | 14.6 | 1.2 | 30 |
| Example 6 | 13.4 | 1.8 | 50 |

Preparation methods in Comparative Examples 1 and 2 were substantially the same as that in Example 1, and a difference lies in that, the removed fine powder has different mass proportions, which is specifically shown in Table 1.

A preparation method for a graphite negative electrode active material in Comparative Example 3 is shown as follows:
S1: Crush a needle green coke raw material, shape and classify the crushed raw material, and remove fine powder, to obtain a precursor having Dv50 of 11 µm.
S2: Add the precursor obtained in step S1 to a reaction kettle, and add a binder pitch (Dv50 of the pitch ranges from 5 µm to 8 µm) whose mass is 10% relative to that of the precursor to perform granulation, increase the temperature to 560°C at a rate of 10°C/min at a room temperature, and keep the temperature constant for 8 hours, to obtain an intermediate product 1, where Dv50 of the intermediate product 1 is 18 µm.
S3: Add the intermediate product 1 obtained in step S2 to a graphitization furnace, increase the temperature to 3000°C to perform graphitization treatment, where a power of the graphitization treatment is a rated power 29000 W of the device, and sieve and demagnetize the obtained intermediate product, to obtain a graphite negative electrode active material, where the graphite negative electrode active material is a graphite negative electrode active material mainly including a secondary particle morphology, the content of the secondary particle morphology is approximately above 70%, Dv1 is 2.3 µm, Dv50 is 14 µm, and the gram capacity is 357 mAh/g.

### II. Performance test

### 1. Black speckle test of secondary battery

The batteries of the foregoing examples and comparative examples are charged at a constant current of 0.33C to a voltage of 3.65V at 25°C, disassembled in a drying house, and whether black speckles exist on the surface of the negative electrode plate is observed.
(1) If a total area of black speckles/a total area of the negative electrode plate ≤ 1%, and an area of black speckles in a single electrode plate/an area of a single electrode plate ≤ 8%, the black speckles are defined as first-level black speckles.
(2) If 1% < a total area of black speckles/a total area of the negative electrode plate ≤ 3%, or 8% < an area of black speckles in a single electrode plate/an area of a single electrode plate ≤ 15%, the black speckles are defined as second-level black speckles.
(3) If a total area of black speckles/a total area of the negative electrode plate > 3%, or an area of black speckles in a single electrode plate/an area of a single electrode plate > 15%, the black speckles are defined as third-level black speckles.

### 2. Cycle performance test of the secondary battery

At 60°C, each of the batteries in the foregoing examples and comparative examples was charged to a voltage of 3.65V at a constant current of 1C and then charged at a constant voltage of 3.65V until the current is less than or equal to 0.05C, and then the battery was discharged to a voltage of 2.5V at a constant current of 1C. This was a charge and discharge process. A discharge capacity C1 at an initial cycle was recorded. Charge and discharge cycles were repeated in such a manner, until the capacity of the battery faded to 80% of the initial capacity C1. The test was stopped, and the number of cycles of the test was recorded.

### 3. Test of storage performance of secondary battery

In an environment at 25°C, a charge-discharge test was performed, a battery was charged to a voltage of 3.65V at a constant current of 1C and then charged at a constant voltage of 3.65V until the current is less than or equal to 0.05C, and then the battery was discharged to a voltage of 2.5V at a constant current of 1C. This was a charge and discharge process. A discharge capacity at an initial cycle, that is, an initial discharging capacity was recorded as C0. Then, a cell was fully charged and placed in an environment at 60°C for different periods of time, and was taken out every 30 days to test a remaining capacity C1 at 25°C. This is a storage period, and the current discharge capacity is a discharge capacity after the 1st time of storage. Subsequently, the 1st storage test procedure was repeated, a discharge capacity value in a storage process was recorded, and a 120-day cycle capacity retention rate was recorded.

### III. Results

It can be learned from Table 3 that, volume distribution particle sizes Dv1 of the graphite negative electrode active materials provided in Examples 1 to 3 of the present disclosure range from 1.5 µm to 3 µm; and the graphite negative electrode active materials mainly include a primary particle morphology. It can be learned from comparisons between Examples 1 to 3 and Comparative Examples 1 and 3 that, the graphite negative electrode active materials of the present disclosure can reduce the possibility of occurrence of black speckles in an electrode plate, increase the number of cycles of the battery, improve the cycle life of the battery, and prolong the service life.

**Table 3**

| | Graphite negative electrode active material | | | Secondary battery |
|---|---|---|---|---|
| Serial number | Dv1 (µm) | Material particle morphology | Black speckle level | Number of cycles |
| Example 1 | 2.0 | Primary particles | None | 2216 |
| Example 2 | 1.5 | Primary particles | None | 2145 |
| Example 3 | 3.0 | Primary particles | None | 2113 |
| Comparative Example 1 | 1.0 | Primary particles | None | 1934 |
| Comparative Example 2 | 4.3 | Primary particles | Second level | 2010 |
| Comparative Example 3 | 2.3 | Secondary particles | None | 1489 |

It can be learned from Table 4 that, a volume distribution particle size Dv50 of the graphite negative electrode active material ranges from 12 µm to 16 µm, which can effectively consider both the cycle life and storage stability of the battery. A volume distribution particle size Dv50 of the graphite negative electrode active material ranges from 13 µm to 15 µm, which can further improve the cycle life and storage stability of the battery.

It can be learned from Table 4 that, a specific surface area of the graphite negative electrode active material is less than or equal to 1.4 m²/g, which can effectively consider both the cycle life and storage stability of the battery. A specific surface area of the graphite negative electrode active material ranges from 0.6 m²/g to 1.3 m²/g, which can further improve the cycle life and storage stability of the battery.

**Table 4**

| | Graphite negative electrode active material | | | | Secondary battery | |
|---|---|---|---|---|---|---|
| Serial number | Dv1 (µm) | Whether the primary particle morphology is included | Dv50 (µm) | Specific surface area (m²/g) | Number of cycles | Storage performance |
| Example 1 | 2.0 | Yes | 14.3 | 1.1 | 2298 | 91.7% |
| Example 4 | 2.0 | Yes | 15.0 | 0.6 | 2325 | 92.5% |
| Example 5 | 2.0 | Yes | 13.2 | 0.9 | 2237 | 91.6% |
| Example 6 | 2.0 | Yes | 12.1 | 1.4 | 2012 | 90.7% |

It needs to be noted that the present disclosure is not limited to the above embodiments. The above embodiments are only illustrative, and the embodiments within the scope of the technical solution of the present disclosure that have substantively the same composition and the same role and effect as the technical idea are all included in the technical scope of the present disclosure. In addition, within the scope of not departing from the gist of the present disclosure, various variations made to the embodiments that are conceivable to those skilled in the art and other modes constructed by combining some constituent elements of the embodiment are also included in the scope of the present disclosure.

## Claims

1. A graphite negative electrode active material, wherein a volume distribution particle size Dv1 of the graphite negative electrode active material ranges from 1.5 µm to 3 µm; and the graphite negative electrode active material comprises a primary particle morphology.

2. The graphite negative electrode active material according to claim 1, wherein a specific surface area of the graphite negative electrode active material is less than or equal to 1.4 m²/g, and optionally ranges from 0.6 m²/g to 1.3 m²/g.

3. The graphite negative electrode active material according to claim 1 or 2, wherein a volume distribution particle size Dv50 of the graphite negative electrode active material ranges from 12 µm to 16 µm, and optionally ranges from 13 µm to 15 µm.

4. The graphite negative electrode active material according to any one of claims 1 to 3, wherein based on a total quantity of particles of the graphite negative electrode active material, a quantity proportion of primary particles is greater than or equal to 80%, and optionally ranges from 85% to 100%.

5. The graphite negative electrode active material according to any one of claims 1 to 4, wherein a gram capacity of the graphite negative electrode active material is greater than or equal to 340 mAh/g, and optionally ranges from 341 mAh/g to 347 mAh/g.

6. The graphite negative electrode active material according to any one of claims 1 to 5, wherein a tap density of the graphite negative electrode active material ranges from 1.2 g/cm³ to 1.4 g/cm³.

7. The graphite negative electrode active material according to any one of claims 1 to 6, wherein a particle size distribution (Dv90-Dv10)/Dv50 of the graphite negative electrode active material ranges from 1.20 to 1.70, and optionally ranges from 1.35 to 1.60.

8. A preparation method for a graphite negative electrode active material, comprising the following steps:
providing a raw material;
treating the raw material to obtain a precursor;
performing graphitization treatment on the precursor to obtain an intermediate product; and
performing sieving treatment on the intermediate product to obtain a graphite negative electrode active material, wherein
a volume distribution particle size Dv1 of the graphite negative electrode active material ranges from 1.5 µm to 3 µm; and the graphite negative electrode active material comprises a primary particle morphology.

9. The preparation method according to claim 8, wherein the treating the raw material specifically comprises the following steps:
crushing, shaping, and classifying the raw material, to obtain a precursor; and
removing a proportion of fine powder in a process of the classifying, wherein
based on a total mass of the raw material, a mass proportion of the removed fine powder ranges from 10% to 35%; and a volume distribution particle size Dv50 of the fine powder ranges from 3 µm to 7 µm, and (Dv90-Dv10)/Dv50 of the fine powder is greater than 1.6.

10. The preparation method according to claim 8 or 9, wherein a maximum power of the graphitization treatment is 70% to 90% of a rated power of a graphitization device.

11. The preparation method according to claim 10, wherein the maximum power of the graphitization treatment ranges from 23000 W to 25000 W; and/or, a constant power time of the graphitization treatment at the maximum power ranges from 10 h to 50 h.

12. The preparation method according to any one of claims 8 to 11, wherein the precursor meets at least one of the following conditions:
a volume distribution particle size Dv50 of the precursor ranges from 12 µm to 18 µm; and/or
a particle size distribution (Dv90-Dv10)/Dv50 of the precursor ranges from 1.2 to 1.8.

13. A secondary battery, comprising a negative electrode plate, wherein the negative electrode plate comprises the graphite negative electrode active material according to any one of claims 1 to 7, or a graphite negative electrode active material prepared by using the preparation method according to any one of claims 8 to 12.

14. The secondary battery according to claim 13, wherein a compaction density of the negative electrode film layer ranges from 1.35 g/cm³ to 1.65 g/cm³, and optionally ranges from 1.40 g/cm³ to 1.55 g/cm³.

15. The secondary battery according to claim 13 or 14, wherein an areal density of the negative electrode film layer ranges from 7 mg/cm² to 14 mg/cm², and optionally ranges from 9 mg/cm² to 12 mg/cm².

16. A power consuming apparatus, comprising the secondary battery according to any one of claims 13 to 15.
